# EUROPEAN PATENT SPECIFICATION

(11) **EP 3 585 183 B1**
(45) Date of publication and mention of the grant of the patent: **20.05.2026**
(21) Application number: 18705927.4
(22) Date of filing: 19.02.2018
(51) Int. Cl.: A23K 50/30, A23K 10/30, A23K 20/121, A23K 50/75, A23K 50/60

(54) **ANIMAL FEED ADDITIVE FROM WOOD FOR QUORUM SENSING INHIBITION**
TIERFUTTERZUSATZ AUS HOLZ ZUR QUORUM-SENSING-HEMMUNG
ADDITIF ALIMENTAIRE POUR ANIMAUX PROVENANT DU BOIS POUR L'INHIBITION DE LA DÉTECTION DU QUORUM

(30) Priority: 23.02.2017 AT 501452017
(43) Date of publication of application: 01.01.2020
(73) Proprietor: Neufeld GmbH, 2532 Heiligenkreuz (AT); Agromed Austria GmbH, 4550 Kremsmünster (AT); Westerkamp, Arnold, 49429 Visbek (DE)
(72) Inventor: NEUFELD, Klaus, deceased (AT); NEUFELD, Nina, 2532 Heiligenkreuz bei Baden (AT)
(74) Representative: Puchberger & Partner Patentanwälte
(86) International application number: PCT/EP2018/053995
(87) International publication number: WO 2018/153804

(56) References cited:
- EP-A2- 2 252 154
- WO-A1-2009/000970
- KR-A- 20110 087 374
- KR-B1- 100 911 279
- US-A1- 2010 129 302
- US-A1- 2010 129 304
- R�MEYSA ERIS ET AL: "Rose, Clove, Chamomile Essential Oils and Pine Turpentine Inhibit Quorum Sensing in Chromobacterium violaceum and Pseudomonas aeruginosa", JOURNAL OF ESSENTIAL OIL-BEARING PLANTS, vol. 16, no. 2, 1 April 2013 (2013-04-01), IN, pages 126 - 135, XP55753632, ISSN: 0972-060X, DOI: 10.1080/0972060X.2013.794026
- PAN JIACHUAN ET AL: "Quorum sensing inhibitors: a patent overview", EXPERT OPINION ON THERAPEUTIC PATENTS, INFORMA HEALTHCARE, GB, vol. 19, no. 11, 1 November 2009 (2009-11-01), pages 1581 - 1601, XP009128222, ISSN: 0962-2594, DOI: 10.1517/13543770903222293
- VIPIN CHANDRA KALIA: "Quorum sensing inhibitors: An overview", BIOTECHNOLOGY ADVANCES., vol. 31, no. 2, 1 March 2013 (2013-03-01), GB, pages 224 - 245, XP055467924, ISSN: 0734-9750, DOI: 10.1016/j.biotechadv.2012.10.004

## Description

The present invention relates to a composition for use in antibiotic-free prophylaxis of infectious diseases by quorum sensing inhibition in farm animals and pets.

In farm animal production huge quantities of antibiotics have been used as growth promoting additives as well as for therapeutic reasons against pathogenic bacteria. The occurrence of antibiotic resistances resulted in the withdrawal of antibiotic growth promoters in several countries and a restriction in the use of therapeutic antibiotics, both in farm animals and pets. This so-called "demedication process" takes actually place in most European countries but even in areas like South East Asia and Northern and Latin America. The strategy for the future should be to avoid broad misuse of antibiotics in farm animals and pets without the risk of outbreak of detrimental bacterial diseases. Quorum sensing inhibition is one way to reduce pathogenicity of bacteria. Quorum sensing is a cell-to-cell-communication used by bacteria to control the expression of certain genes including virulence genes by producing signal molecules. Disrupting the quorum sensing mechanism of pathogens is an attractive, potential way to control disease outbreaks in farm animals and pets without the need of using antibiotics.

The present invention provides a product with quorum sensing inhibiting activity in the form of a composition for use in antibiotic-free prophylaxis of infectious diseases by quorum sensing inhibition in farm animals and pets. The composition for use of the invention comprises wood particles from trees. The trees are selected from the family of Pinaceae, Cupressaceae and from Aspen tree. The scope of the present invention is defined by the attached claims.

Wood material and/or wood extracts according to the prior art are disclosed in WO 2009/000970 A1, EP 2 252 154 A2, US 2010/129304 A1 and US 2010/129302. KR 100 911 279 B1 describes a feed mixture for replacing antibiotics using pine bark and needles.

According to another feature of the invention, the composition for use further comprises an oligomeric procyanidin. In one embodiment, the oligomeric procyanidin comprises four to eight catechin units. In another embodiment, the oligomeric procyanidin comprises more than 8 catechin units. Experiments conducted by the present inventors have shown that using the wood particles in combination with low amounts of an oligomeric procyanidin with 4-8 and/or >8 catechin units significantly improved the effect of the invention.

According to the invention, the wood particles are present in fibrillated form, whereas fibrillation means the mechanical size reduction of wood particles to single or aggregated fibril structures. In one embodiment of the invention, the composition for use comprises fibrillated wood particles in combination with an oligomeric procyanidin. According to the invention, the composition for use comprises at least 90 wt% of fibrillated wood particles having a particle size in the range of 50 to 500 µm.

According to another feature of the disclosure other preferred compositions can be e.g. mixtures of wood particles from one or more trees from the family of Pinaceae, optionally in combination with wood particles from aspen, cypress and/or bamboo. In one embodiment, any mixture of wood particles may further comprise oligomeric procyanidins.

The present invention also relates to a feed stuff for farm animals and pets, said feed stuff comprising a composition for use as defined above in a dosage of 0.05%-10% by weight based on total weight of the feed stuff, together with at least one feed component selected from the group consisting of protein substrates, carbohydrate substrates, crude fibre sources, green fodder preserves (silage), fats, vitamins, minerals and trace elements.

The present invention also relates to a premix for preparing the above feed stuff for farm animals and pets. Said premix comprises a composition for use of the invention together with at least one feed component selected from the group consisting of protein substrates, carbohydrate substrates, crude fibre sources, green fodder preserves (silage), fats, vitamins, minerals and trace elements.

Further disclosed is the use of a composition as defined above for use in modulating body temperature of farm animals and pets especially under heat stress conditions.

Further disclosed is the use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive for antibiotic-free prophylaxis of infectious diseases in farm animals and pets.

Further disclosed is the use of at least one of wood particles from trees and wood particles from lignifying grass, said trees preferably being selected from the family of Pinaceae, Cupressaceae and from Aspen tree and said lignifying grass preferably being selected from the family of Bambusoideae, as a feed additive for use in modulating body temperature of farm animals and pets especially under heat stress conditions.

Surprisingly the composition for use of the present invention can significantly inhibit quorum sensing communication of pathogenic bacteria like E.coli, Salmonella, Staphylococci, Campylobacter, Streptococci etc. in farm animals and pets. Thus, the feed additive of the present invention exhibits an excellent control against pathogenicity factors of bacteria like enterotoxins, film formation etc. in farm animals and pets and avoids in many cases the outbreak of diseases without the need of using therapeutic antibiotics. This effect is highly interesting especially in antibiotic resistant bacteria like e.g. ESBL bacteria which cannot be influenced by standard antibiotics. On the other hand a product reducing the risk of the outbreak of a bacterial-caused disease without any antimicrobial effect is highly requested as the antimicrobial action of a product does not only destroy pathogenic bacteria but even modulates or destroys the intestinal flora which is important for the organism by producing immune factors, vitamins and valuable metabolites like volatile fatty acids, bacteriocins etc. In summary, it has to be lined out that the present invention does not influence viability of bacteria but inhibits formation of deleterious bacterial metabolites initiated via quorum sensing communication between bacteria during growth phase. This is completely different to the action of antibiotics or antimicrobial substances which are preferably used in farm animal and pets to fight against bacterial diseases.

The present invention will now be described in detail with reference to examples, which are intended to be only illustrative and do not limit the scope of the invention in any way.

### Example 1

In an in vitro test system the effect of the invention was tested with a beta-toxin producing strain of Clostridium perfringens type C. Clostridium perfringens was cultivated in 0.1% glucose-tryptone-salts medium without addition of the test substance (control) or with addition of test substance in various concentrations. The test substance was a composition comprising a fibrillated product composed of a mixture of wood from spruce and pine tree. Production of beta toxin was evaluated with a commercial immuno-essay kit. The results are presented in Table 1 below.

**Table 1**

| Dosage of test substance | 0 (control) | 0.0001% | 0.001% | 0.01% | 0.1% | 1% |
|---|---|---|---|---|---|---|
| Production of beta toxin | +++ | +++ | ++ | + | - | - |

| | | | | | | |
|---|---|---|---|---|---|---|
| +++ indicates high production; ++ indicates medium production; + indicates low production; - indicates no production of beta toxin. | | | | | | |

### Example 2

In a field study in a commercial piglet farm with evident problems with enterohemorrhagic E.coli infections a number of 360 piglets was divided into 6 groups after weaning. All animals received a commercial standard diet for weaning piglets (Table 2). The "zero control group" received this feed without addition of any therapeutics or additives. For the "antibiotic group" (positive control group) Neomycin was added to the feed in a therapeutic dosage of 10 mg Neomycin sulfate/kg body mass/day "on-top". The four test groups received the weaning diet with an "on-top" addition of various concentrations of the test substance. The test substance was a composition, comprising a product composed of wood from spruce and pine tree.

**Table 2:**

| | |
|---|---|
| Wheat | 27,40% |
| Barley | 25,00% |
| Corn | 20,00% |
| Soybean meal HP | 16,30% |
| Wheat bran | 5,30% |
| Soybean oil | 1,00% |
| Monocalcium phosphate | 0,70% |
| Calcium carbonate | 0,65% |
| Salt | 0,35% |
| Fish oil | 0,10% |
| Premix, acids | 3,20% |

Incidence of diarrhea was reported for all groups during the test period of 10 days. In the test an effect of the feed additive of the invention was even evaluated in regard of the body temperature of the animals. The results are presented in Table 3 below.

**Table 3**

| Group | Zero control | Neomycin control | 0.1% test substance | 0.5% test substance | 1.0% test substance | 5.0% test substance |
|---|---|---|---|---|---|---|
| Dosage | --- | 10mg/kg body mass/day | 0.1% | 0.5% | 1.0% | 5.0% |
| Incidence of diarrhea | 78.3% | 56.7% | 53.3% | 26.7% | 18.3% | 15.0% |
| Average body temperature | 39.8°C | 39.6°C | 39.6°C | 39.5°C | 39.5°C | 39.3°C |

As can be seen from Table 3, incidence of diarrhea was significantly reduced in a dose-depending manner in animals receiving the test substance, i.e. the composition for use of the invention.

Further, the test substance was able to reduce elevated body temperature significantly, although this aspect does not form part of the invention.

Completely surprisingly, in another test system with non-infected animals it was seen that the feed additive of the invention can slightly reduce normal body temperature to a specific extend and especially elevated body temperature under environmental heat stress conditions. This effect is highly interesting as body temperature has a direct influence on body metabolism and energy consumption. Therefore a slight reduction in average body temperature can dramatically decrease energy demand for growth and production. Furthermore the effect of modulating body temperature is highly interesting in farm animals under heat stress conditions often seen in pigs, poultry and even in ruminants, too. Furthermore the seen effect is of interest in pets like dogs especially breeds which are sensitive to high temperature conditions (long-hair breeds in summertime).

### Example 3 (not according to the invention)

In a field study in a commercial breeding farm a number of 50 healthy sows being in the second week of lactation was divided into five groups. All animals received a commercial standard diet for sows (Table 4). The control group received this diet without any additives. The four test groups received the weaning diet with an "on-top" addition of various concentrations of the test substance. The test substance was a composition, comprising a product composed from a mixture of wood from spruce and pine tree. On the seventh day of trial (third week of lactation) body temperature was measured in all sows (rectal method). Table 5 shows the average body temperature for each group.

**Table 4**

| | |
|---|---|
| Barley | 40% |
| Corn | 11% |
| Wheat | 10% |
| Rape seed and sunflower meal | 11% |
| Wheat meal | 15% |
| Wheat bran | 5% |
| Beet pulp | 5% |
| Mineral premix | 3% |

**Table 5**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 39.7°C | 39.6°C | 39.3°C | 39.3°C | 39.1°C |

### Example 4 (not according to the invention)

In a feeding trial with 250 healthy piglets the invention was tested regarding influence on body temperature. Trial started post-weaning at an age of 12 weeks and lasted for seven days. All piglets received a standard piglet diet (see Example 1, Table 2). The control group received this diet without any additions. The four trial groups received this diet with an "on-top" addition of various concentrations of the test substance. The test substance was a composition, comprising a product composed of wood from spruce and pine tree. On the seventh day of trial body temperature of all piglets was measured (rectal method). Table 6 shows the average body temperature for each group.

**Table 6**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 39.3°C | 39.3°C | 39.2°C | 39.2°C | 39.0°C |

### Example 5 (not according to the invention)

In a feeding trial with 250 male broilers the invention was tested regarding influence on body temperature under heat stress conditions. The trial started at an age of 21 days. All broilers received a standard broiler diet (Table 7). The control group received this diet without any additions. The four trial groups received this diet with an "on-top" addition of various concentrations of the test substance. The test substance was a quorum sensing inhibitor of the invention, comprising a product composed of wood from spruce and pine tree in combination with an oligomeric procyanidin with 4-8 catechin units in an amount of 0.1 wt%. Broilers were kept at standardized room temperature according to guidelines. On day 28, room temperature in the pens was increased to 36°C for three hours. At the end of this period of heat stress body temperature of all animals was measured by infrared thermometry. Table 8 shows the average body temperature for each group.

**Table 7**

| | |
|---|---|
| Corn | 50% |
| Wheat | 10% |
| Soymeal | 32% |
| Mineral premix | 3% |
| Fat | 5% |

**Table 8**

| Group | Zero control | 0.1% test substance | 0.5% test substance | 1.0% test substance | 5.0% test substance |
|---|---|---|---|---|---|
| Dosage | --- | 0.1% | 0.5% | 1.0% | 5.0% |
| Average body temperature | 43.2°C | 42.8°C | 41.9°C | 41.8°C | 41.3°C |

### Example 6

In a field study in a commercial piglet farm with evident problems with enterohemorrhagic E.coli infections a number of 360 piglets was divided into 6 groups after weaning. All animals received a commercial standard diet for weaning piglets (see Example 1, Table 2). The zero control group received this feed without addition of any therapeutics or additives. For the Neomycin control group Neomycin was added to the feed in a therapeutic dosage of 10 mg Neomycin sulfate/kg body mass/day. The four test groups received the weaning diet with addition of the test substance in various concentrations. In this example, the test substance was a mixture of wood from spruce and pine tree in combination with an oligomeric procyanidin with more than 8 catechin units in an amount of 0.3 wt%. Incidence of diarrhea was reported for all groups during the test period of 10 days. The results are presented in Table 9 below.

**Table 9**

| Group | Zero control | Neomycin control | 0.1% test substance | 0.5% test substance | 1.0% test substance | 5.0% test substance |
|---|---|---|---|---|---|---|
| Dosage | --- | 10 mg/kg body mass/day | 0.1% | 0.5% | 1.0% | 5.0% |
| Incidence of diarrhea | 81.7% | 60% | 38.3% | 21.7% | 15.0% | 11.7% |

As can be seen from Table 9, incidence of diarrhea was significantly reduced in animals receiving the feed additive of the invention. The effect was more pronounced than under the trial conditions shown in Table 3 with a product without a combination with oligomeric procyanidins.

## Claims

1. Composition for use in antibiotic-free prophylaxis of infectious diseases by quorum sensing inhibition in farm animals and pets comprising wood particles from trees, said trees being selected from the family of Pinaceae, Cupressaceae and from Aspen tree, **characterized in that** the composition comprises at least 90 wt% of fibrillated wood particles having a particle size between 50 and 500 micrometers.

2. Composition for use according to claim 1, wherein the infectious disease is diarrhea or wherein the disease is associated with diarrhea.

3. Composition for use according to any of claims 1 or 2 further comprising an oligomeric procyanidin.

4. Composition for use according to claim 3 wherein the oligomeric procyanidin comprises more than four catechin units.

5. A feed stuff for farm animals and pets containing a composition for use according to any of claims 1-4 in a dosage of 0.05%-10% by weight based on total weight of the feed stuff, together with at least one feed component selected from the group consisting of protein substrates, carbohydrate substrates, crude fibre sources, green fodder preserves (silage), fats, vitamins, minerals and trace elements.

6. A premix for preparing the feed stuff of claim 5, containing a composition for use according to any of claims 1-4 together with at least one feed component selected from the group consisting of protein substrates, carbohydrate substrates, crude fibre sources, green fodder preserves (silage), fats, vitamins, minerals and trace elements.

7. A feed additive containing a composition for use according to any of claims 1 to 5.

## Patentansprüche

1. Zusammensetzung zur Verwendung in der antibiotikafreien Prophylaxe von Infektionskrankheiten durch Quorum-Sensing-Hemmung bei Nutz- und Haustieren, umfassend Holzpartikel von Bäumen, wobei die Bäume aus der Familie der Pinaceae, Cupressaceae und der Espe ausgewählt sind, **dadurch gekennzeichnet, dass** die Zusammensetzung mindestens 90 Gew.-% an fibrillierten Holzpartikeln mit einer Partikelgröße zwischen 50 und 500 Mikrometern umfasst.

2. Zusammensetzung zur Verwendung nach Anspruch 1, wobei die Infektionskrankheit Diarrhoe ist oder wobei die Krankheit mit Diarrhoe verbunden ist.

3. Zusammensetzung zur Verwendung nach einem der Ansprüche 1 oder 2, ferner umfassend ein oligomeres Procyanidin.

4. Zusammensetzung zur Verwendung nach Anspruch 3, wobei das oligomere Procyanidin mehr als vier Catechin-Einheiten umfasst.

5. Futtermittel für Nutz- und Haustiere, enthaltend eine Zusammensetzung zur Verwendung gemäß einem der Ansprüche 1-4 in einer Dosierung von 0,05 Gew.-% bis 10 Gew.-%, bezogen auf das Gesamtgewicht des Futtermittels, zusammen mit mindestens einer Futterkomponente, ausgewählt aus der Gruppe bestehend aus Proteinsubstraten, Kohlenhydratsubstraten, Rohfaserquellen, Grünfutterkonserven (Silage), Fetten, Vitaminen, Mineralstoffen und Spurenelementen.

6. Vormischung zur Herstellung des Futtermittels nach Anspruch 5, enthaltend eine Zusammensetzung zur Verwendung nach einem der Ansprüche 1-4 zusammen mit mindestens einer Futterkomponente, ausgewählt aus der Gruppe bestehend aus Proteinsubstraten, Kohlenhydratsubstraten, Rohfaserquellen, Grünfutterkonserven (Silage), Fetten, Vitaminen, Mineralstoffen und Spurenelementen.

7. Futtermittelzusatzstoff, enthaltend eine Zusammensetzung zur Verwendung nach einem der Ansprüche 1 bis 5.

## Revendications

1. Composition destinée à être utilisée dans la prophylaxie sans antibiotiques des maladies infectieuses par inhibition de la détection du quorum chez les animaux d'élevage et les animaux de compagnie, comprenant des particules de bois provenant d'arbres, lesdits arbres étant choisis parmi les familles des Pinaceae, des Cupressaceae et du Peuplier tremble, **caractérisée en ce que** la composition comprend au moins 90 % en poids de particules de bois fibrillées ayant une taille comprise entre 50 et 500 micromètres.

2. Composition destinée à être utilisée selon la revendication 1, dans laquelle la maladie infectieuse est une diarrhée ou dans laquelle la maladie est associée à une diarrhée.

3. Composition destinée à être utilisée selon l'une quelconque des revendications 1 ou 2, comprenant en outre une procyanidine oligomère.

4. Composition destinée à être utilisée selon la revendication 3, dans laquelle la procyanidine oligomère comprend plus de quatre unités de catéchine.

5. Fourrage pour animaux d'élevage et animaux de compagnie contenant une composition destinée à être utilisée selon l'une quelconque des revendications 1 à 4, dans un dosage de 0,05 % à 10 % en poids par rapport au poids total du fourrage, ainsi qu'au moins un composant de fourrage choisi parmi le groupe constitué de substrats protéiques, de substrats glucidiques, de sources de fibres brutes, de fourrages verts conservés (ensilage), de matières grasses, de vitamines, de minéraux et d'oligo-éléments.

6. Prémélange destiné à la préparation du fourrage de la revendication 5, contenant une composition destinée à être utilisée selon l'une quelconque des revendications 1 à 4, ainsi qu'au moins un composant de fourrage choisi parmi le groupe constitué de substrats protéiques, de substrats glucidiques, de sources de fibres brutes, de fourrages verts conservés (ensilage), de matières grasses, de vitamines, de minéraux et d'oligo-éléments.

7. Additif de fourrage contenant une composition destinée à être utilisée selon l'une quelconque des revendications 1 à 5.
